# EUROPÄISCHE PATENTANMELDUNG

(11) **EP 0 684 151 A1**
(43) Veröffentlichungstag der Anmeldung: **29.11.1995**
(21) Anmeldenummer: 95106511.9
(22) Anmeldetag: 29.04.1995
(51) Int. Cl.: B60H 3/00, F24F 3/12

(54) **Verfahren und Vorrichtung zur Frischluft-Neutralisation für Klimaanlagen**

(30) Priorität: 26.05.1994 DE 4418289
(71) Anmelder: von Lepel, Freifrau, Barbara, D-74199 Untergruppenbach-Vorhof (DE)
(72) Erfinder: Schreck, Roman, Dipl. Ing., D-86179 Augsburg (DE); Kurtz, Benno, D-86637 Possenried (DE)
(74) Vertreter: Riebling, Peter, Dr.-Ing.

(57) **Zusammenfassung**

Beschrieben wird ein Frischluft-Neutralisations-Verfahren für Klimaanlagen, wobei Wirkstoffe in den Luftstrom eingebracht werden, insbesondere Duft-, Aroma- und Neutralisierungsstoffe, wobei die Mischung der Wirkstoffe in flüssiger Form in einem gegenüber dem Luftstrom abgeschlossenen Behälter (1) gelagert wird, die Mischung über die Kapillaren mindestens eines Verdunstungs-Kernkörpers (5) aus dem Behälter (1) heraus in den Bereich des Luftstroms gefördert wird und die Verdunstung kleinflächig an zugeordneten Flächen des mindestens eines Verdunstungs-Kernkörpers (5) durchgeführt wird.

## Beschreibung

Gegenstand der Erfindung ist ein Verfahren nach dem Oberbegriff des Anspruches 1 sowie eine Vorrichtung nach dem Oberbegriff des Anspruches 6.

Ein ähnliches Verfahren und eine ähnliche Vorrichtung sind aus der DE 40 11 514 C1 bekanntgeworden. In dieser Druckschrift ist vorgesehen, ein Gemisch aus Wasser und einem Duftstoff herzustellen und in einem Behälter aufzubewahren. Dieser Behälter weist eine freie Verdunstungsoberfläche für das Gemisch auf, über die der Luftstrom oder ein Teil des Luftstromes der Klimaanlage geleitet und anschließend in das Klimatisierungsluftsystem abgegeben wird.

Diese Ausbildung weist mehrere Nachteile auf.

Erstens wird die Flüssigkeit in einem Behälter gelagert, der direkt von der Luft durchströmt wird. Es werden also Verschmutzungen und Bakterien mit der Außenluft eingebracht. Im Behälter selbst können sich dann in der Flüssigkeit ganze Kolonien von Bakterien bilden, was durch die im Gebäude vorhandene Wärme noch begünstigt wird.

Ein weiterer Nachteil ist, daß der Luftstrom die Flüssigkeit direkt überstreicht. Es werden daher höchstwahrscheinlich Tropfen aus der Flüssigkeit herausgelöst werden, die nicht verdampfen, sondern nur vom Luftstrom mitgerissen werden. Dies führt einerseits zu einem schlechten Wirkungsgrad, andererseits dazu, daß die in den klimatisierenden Räumen befindlichen Personen von den Bakterien in diesen Tropfen mit verschiedenen Krankheiten infiziert werden können.

Ein weiterer Nachteil ist, daß die Verdunstungsoberfläche nur sehr klein bemessen werden kann, da man anderenfalls sehr große, wannenartige Behälter benötigen würde.

Darüber hinaus ist die gesamte Anlage sehr kompliziert aufgebaut.

Aufgabe der vorliegenden Erfindung ist es daher, ein bekanntes Verfahren sowie eine Vorrichtung zur Frischtluft-Neutralisation so weiterzubilden, daß eine zuverlässige, dosierte, feinverteilte Abgabe einer Mischung von Wirkstoffen in gasförmiger Form mit einfachen technischen Mitteln erfolgt. Dabei soll die Tröpfchenbildung praktisch ausgeschaltet werden.

Erfindungsgemäß wird diese Aufgabe durch die technische Lehre der Ansprüche 1 oder 6 gelöst.

Dabei ist wesentlich, daß die Mischung der Wirkstoffe in flüssiger Form in einem gegenüber dem Luftstrom abgeschlossenen Behälter gelagert wird, wobei aus dem Behälter mindestens ein Verdunstungs-Kernkörper herausragt, der die flüssige Mischung mit Hilfe eines Netzes von Kapillaren aus dem Behälter in den Bereich des Luftstroms hineinfördert.

Selbstverständlich ist auch die Verwendung mehrerer Verdunstungs-Kernkörper möglich. Dadurch ergeben sich verschiedene Vorteile: Durch die Abschottung des Behälters gegenüber der umströmenden Luft ist gewährleistet, daß es zu keinem direkten Kontakt zwischen dem Luftstrom und großen Verdunstungsoberflächen der flüssigen Mischung der Wirkstoffe kommt. Die Gefahr der Tröpfchenbildung wird damit auf ein Minimum verringert.

Gleichzeitig wird durch die Förderung der flüssigen Mischung über die Kapillaren der Verdunstungs-Kernkörper die zur Verfügung stehende Verdunstungsoberfläche wesentlich vergrößert. Die Gefahr der Tropfenbildung wird verringert, da die einzelnen, größeren Tropfen der flüssigen Mischung aufgrund der Kohäsion in den Kapillaren bzw. den zugeordneten Austrittsbereichen gehalten werden und somit eine größere Herauslöseenergie aufweisen. Demgegenüber kann das Verdunsten leicht durchgeführt werden.

In vorteilhafter Weiterbildung der Erfindung ist der Behälter mit einer Einrichtung versehen, mit der der noch im Behälter befindliche Flüssigkeitsstand abgelesen werden kann.

Die Verwendung eines derartigen Frischluft-Neutralisators kann im Hauptstromkanal, im Nebenstromkanal oder in beiden Kanälen der Klimaanlage durchgeführt werden. Dabei ist es durchaus möglich, mehrere Module gleichzeitig zu verwenden.

Es ist selbstverständlich ebenfalls möglich, eine Anpassung an unterschiedliche Anforderungen und Randbedingungen durch die Verwendung mehrerer, auch unterschiedlicher Verdunstungs-Kernkörper zu erreichen.

Um das Entstehen von Unterdruck im Behälter zu verhindern, ist es vorgesehen, daß der Behälter mit einem Ausgleichsventil versehen ist, das zwar Lufteintritt in den behälter ermöglicht, aber keinen Luftaustritt. Dadurch wird gewährleistet, daß vom vorbeistreichenden Luftstrom keinerlei Tropfen aus der Flüssigkeit mitgerissen werden können.

Alternativ ist es selbstverständlich möglich, den auf dem Behälter sitzenden Deckel nicht vollständig dicht auszubilden. Es ergibt sich dann zwar hier die Möglichkeit, daß der Luftstrom der Klimaanlage in den Behälter eintritt und Kontakt mit der dort vorliegenden, relativ großen Verdunstungsoberfläche der flüssigen Mischung hat, allerdings wird durch die geringe Breite der Spalten der eintretende Luftstrom so abgebremst, daß eine Tröpfchenbildung sowie ein Austreten des Luftstromes aus dem Behälter nicht mehr zu befürchten sind.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert.

Hierbei gehen aus den Zeichnungen und ihrer Beschreibung
weitere erfindungswesentliche Merkmale und Vorteile der Erfindung hervor.

Dabei zeigt:
Figur 1: einen Querschnitt durch das Modul eines erfindungsgemäßen Frischtluft-Neutralisators;
Figur 2a: die Anordnung von zwei derartigen Modulen;
Figur 2b: die Anordnung eines derartigen Moduls;
Figur 3: eine Draufsicht auf ein im Nebenstrom angebrachtes Modul;
Figur 4: eine vergrößerte Draufsicht auf das Modul;
Figur 5: einen Querschnitt durch einen Verdunstungs-Kernkörper.

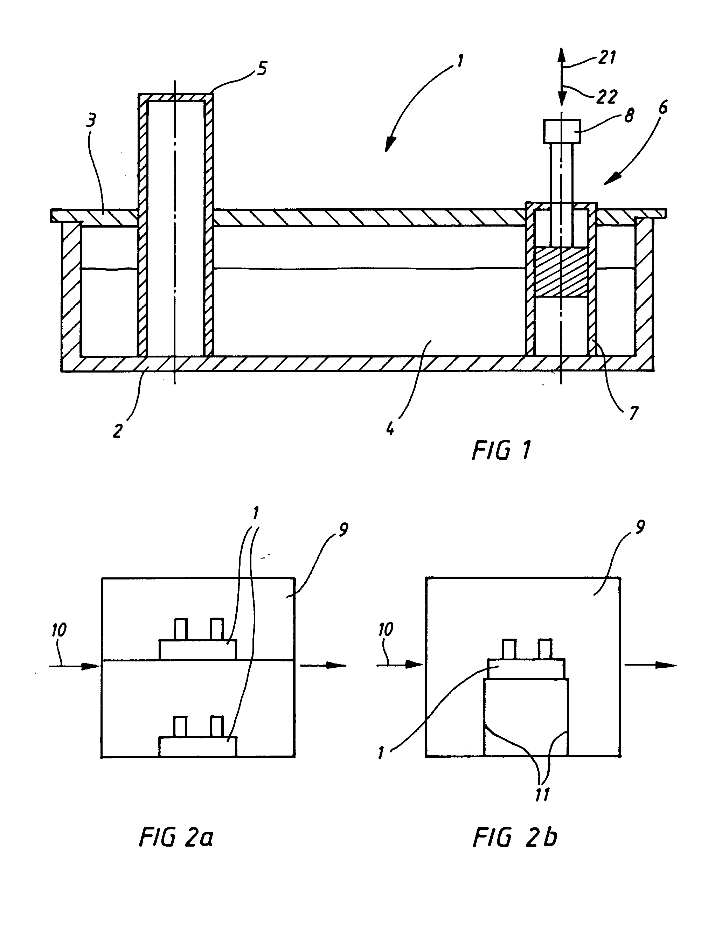

Figur 1 zeigt einen Querschnitt durch ein Modul 1 eines Frischtluft-Neutralisators nach der Erfindung. Dabei besteht das Modul 1 im wesentlichen aus einem Behälter 2, der mit einem Deckel 3 versehen ist. Der Behälter 2 ist zumindest teilweise mit einer Mischung 4 aus verschiedenen Wirkstoffen gefüllt.

Der Deckel 3 weist mehrere Öffnungen für einen oder mehrere Verdunstungs-Kernkörper 5 sowie für eine Füllstandsanzeige 6 auf.

Die Füllstandsanzeige 6 besteht im wesentlichen aus einer Führung 7, in der ein Schieber 8 verschiebbar gelagert ist in den Pfeilrichtungen 21,22, um so den Pegel der Mischung 4 im Behälter 2 anzuzeigen.

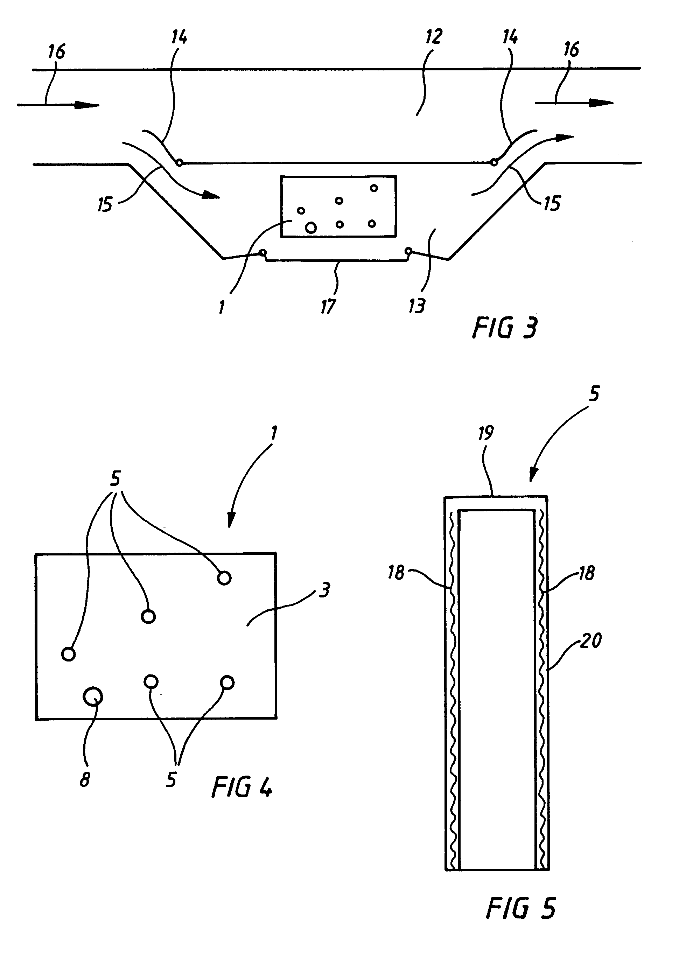

Die Verdunstung der Mischung 4 erfolgt dadurch, daß der Verdunstungs-Kernkörper 5 in seinem Rohrkörper 20 ein Netz von Kapillaren 18 trägt. Dabei steht der Verdunstungs-Kernkörper 5 mit seinem unteren Ende in der Mischung 4; das obere Ende ragt frei in den ihn umströmenden Luftstrom der Klimaanlage hinein. Durch das Vorbeistreichen der Luft an dem Verdunstungs-Kernkörper 5 wird ein Unterdruck erzeugt, der die Mischung 4 über die Kapillaren 18 aus dem Behälter 2 in den Bereich des Luftstromes hineinzieht, wo danach die Mischung 4 verdunstet und die Wirkstoffe in gasförmiger Form von dem Luftstrom mitgerissen werden. Der Verdunstungs-Kernkörper 5 trägt an seiner Oberseite einen Abschluß 19 (Fig. 5).

Dabei ist vorgesehen, daß die Durchstöße der Verdunstungs-Kernkörper 5 sowie der Füllstands
anzeige 6 durch den Deckel 3 mit einer Abdichtung versehen sind.

Die Figuren 2,2a und 3 zeigen verschiedene Aufstellmöglichkeiten für das erfindungsgemäße Modul. In der Figur 2a wird die Kapazität der Anlage durch das Parallelschalten von zwei Modulen 1 erhöht. Die beiden Module 1 sind übereinander in einem Luftkanal 9 angebracht, der in Pfeilrichtung 10 vom Luftstrom durchströmt wird.

In Figur 2b ist nur ein Modul vorgesehen, das allerdings auf Ständern 11 angebracht ist, um etwa in der Mitte des Luftkanals 9 zu stehen. Dadurch wird eine bessere Ausnutzung des vorhandenen Luftquerschnittes erreicht.

Figur 3 zeigt, daR das Modul 1 auch in einem Nebenkanal 13 und nicht zwangsweise im Hauptkanal 12 angeordnet sein muß. Der Luftstrom durchströmt den Hauptkanal 12 in Pfeilrichtung 16, wird aber zumindest teilweise durch die Leitzunge 14 in den Nebenkanal 13 in Pfeilrichtung 15 umgeleitet. In dem Nebenkanal 13 befinden sich eines oder mehrere Module 1, die dort, wie bereits beschrieben, arbeiten.

Es ist vorgesehen, daß eine Inspektionsluke 17 im Nebenkanal 13 angebracht ist, um die Anlage zu Wartungszwecken, z. B. zum Nachfüllen der Flüssigkeit oder zum Reinigen der Verdunstungs-Kernkörper, zu betreten.

Figur 4 zeigt eine leicht vergrößerte Draufsicht auf ein Modul 1. Deutlich ist da erkennbar, daß insgesamt fünf Verdunstungs-Kernkörper 5 vorgesehen sind, die im hier gezeigten Beispiel etwa V-förmig angeordnet sind. Selbstverständlich sind auch andere Anordnungen und eine größere oder kleinere Anzahl von Verdunstungs-Kernkörpern möglich.

Deutlich ist auch der Schieber 8 zu erkennen.

Figur 5 zeigt den Querschnitt eines Verdunstungs-Kernkörpers 5. Dieser besteht im wesentlichen aus einem Rohrkörper 20, der ein Netz von Kapillaren 18 trägt. Der Rohrkörper 20 muß nicht zwingend als Hohlkörper ausgebildet sein, dies wird allerdings aus Gründen der Gewichtsersparnis bevorzugt. Am oberen Ende trägt der Rohrkörper 20 einen Abschluß 19, der als separates Teil befestigt oder materialeinstückig ausgebildet sein kann.

Es ist selbstverständlich möglich, die hier geschilderte Vorrichtung sowie das geschilderte Verfahren zur Frischluft-Neutralisation noch mit geeigneten Filtern zum Reinigen der angesaugten Luft und mit Wärmetauschern zur Rückgewinnung von Wärme aus der ausgeblasenen Luft zu versehen.

Mit der vorliegenden Erfindung ist es erstmals möglich, eine zuverlässige, dosierte und fein verteilte Abgabe einer Mischung von Wirkstoffen in gasförmiger Form zu erreichen, wobei die Tröpfenbildung praktisch ausgeschaltet wird.

### ZEICHNUNGS-LEGENDE

1 Modul
2 Behälter
3 Deckel
4 Mischung
5 Verdunstungs-Kernkörper
6 Füllstandsanzeige
7 Führung
8 Schieber
9 Luftkanal
10 Pfeilrichtung
11 Ständer
12 Hauptkanal
13 Nebenkanal
14 Leitzunge
15 Pfeilrichtung
16 Pfeilrichtung
17 Inspektionsluke
18 Kapillar
19 Abschluß
20 Rohrkörper
21 Pfeilrichtung
22 Pfeilrichtung

## Patentansprüche

1. Frischluft-Neutralisations-Verfahren für Klimaanlagen, wobei Wirkstoffe in den Luftstrom eingebracht werden, insbesondere Duft-, Aroma- und Neutralisierungsstoffe, dadurch gekennzeichnet, daß die Mischung der Wirkstoffe in flüssiger Form in einem gegenüber dem Luftstrom abgeschlossenen Behälter gelagert wird,
die Mischung über die Kapillaren mindestens eines Verdunstungs-Kernkörpers aus dem Behälter heraus in den Bereich des Luftstroms gefördert wird und die Verdunstung kleinflächig an zugeordneten Flächen des mindestens eines Verdunstungs-Kernkörpers durchgeführt wird.

2. Frischtluft-Neutralisations-Verfahren nach Anspruch 1, dadurch gekennzeichnet, daß die Verdunstung im Hauptstrom oder im Nebenstrom der Klimaanlage durchgeführt wird.

3. Frischluft-Neutralisations-Verfahren nach einem der Ansprüche 1 bis 2, dadurch gekennzeichnet, daß der Pegelstand im Behälter über eine geeignete Messung angegeben wird.

4. Frischluft-Neutralisations-Verfahren nach einem der Ansprüche 1 bis 3, dadurch gekennzeichnet, daß die Anpassung an verschiedene Anforderungen durch die Verwendung mehrerer, auch unterschiedlicher Verdunstungs-Kernkörper erreicht wird.

5. Frischtluft-Neutralisations-Verfahren nach einem der Ansprüche 1 bis 4, dadurch gekennzeichnet, daß die Anpassung an verschiedene Anforderungen durch die Verwendung mehrerer Behälter mit den zugeordneten Verdunstungs-Kernkörpern erreicht wird.

6. Vorrichtung zur Frischtluft-Neutralisation mittels Einbringen von Wirkstoffen in den Luftstrom, insbesondere von Duft-, Aroma- und Neutralisierungsstoffen, dadurch gekennzeichnet, daß die Mischung (4) der Wirkstoffe in flüssiger Form in einem gegenüber dem Luftstrom abgeschlossenen Behälter (3) gehalten ist und aus dem Behälter (3) mindestens ein Verdunstungs-Kernkörper (5) herausragt, der mit einem Netz von Kapillaren (18) versehen ist.

7. Vorrichtung nach Anspruch 6, dadurch gekennzeichnet, daß eine Messung des Flüssigkeitspegels erfolgt.
